# EUROPÄISCHE PATENTSCHRIFT

(11) **EP 3 469 484 B1**
(45) Veröffentlichungstag und Bekanntmachung des Hinweises auf die Patenterteilung: **27.05.2020**
(21) Anmeldenummer: 17735044.4
(22) Anmeldetag: 26.06.2017
(51) Int. Cl.: G06F 11/16, G06F 11/07, G06F 11/30

(54) **DATENÜBERTRAGUNG ZWISCHEN SIGNALTECHNISCH SICHEREN RECHENEINHEITEN**
DATA TRANSMISSION BETWEEN SIGNAL FAILSAFE COMPUTING UNITS
TRANSMISSION DE DONNÉES ENTRE DES ORDINATEURS UTILISANT DES SIGNAUX SÉCURISÉS

(30) Priorität: 25.07.2016 DE 102016213554
(43) Veröffentlichungstag der Anmeldung: 17.04.2019
(73) Patentinhaber: Siemens Mobility GmbH, 81739 München (DE)
(72) Erfinder: SCHWEISSTHAL, Hans-Helmut, 38304 Wolfenbüttel (DE)
(86) Internationale Anmeldenummer: PCT/EP2017/065637
(87) Internationale Veröffentlichungsnummer: WO 2018/019497

(56) Entgegenhaltungen:
- US-A- 5 987 554
- US-A1- 2004 230 706
- US-B1- 7 870 299
- POLLACK F ET AL: "A VLSI-intensive fault-tolerant computer architecture", COMPCON SPRING '90: THIRTY-FIFTH IEEE COMPUTER SOCIETY INTERNATIONAL CONFERENCE INTELLECTUAL LEVERAGE; 26 FEB.-2 MARCH 1990; SAN FRANCISCO, CA, USA; [COMPUTER SOCIETY INTERNATIONAL CONFERENCE (COMPCON)], IEEE COMPUT. SOC, LOS ALAMITOS, CA, USA, 26. Februar 1990 (1990-02-26), Seiten 134-142, XP032144408, DOI: 10.1109/CMPCON.1990.63665 ISBN: 978-0-8186-2028-7

## Beschreibung

Die Erfindung betrifft ein System und ein Verfahren zur Übertragung von Daten zwischen signaltechnisch sicheren Recheneinheiten.

Der Begriff "signaltechnisch sicher" soll im Zusammenhang mit der vorliegenden Erfindung in Übereinstimmung mit dem entsprechenden Begriff in der Eisenbahntechnik verstanden werden. Als Referenz kann beispielsweise die Norm EN 50129 dienen. "Signaltechnisch sicher" bedeutet grundsätzlich, dass die Wahrscheinlichkeit für das Eintreffen einer definierten Gefährdung unterhalb eines vorgegebenen Schwellenwertes liegt. Signaltechnische Sicherheit wird in der Regel dadurch hergestellt, dass Berechnungen redundant durchgeführt werden. Vorzugsweise werden die Berechnungen diversitär redundant durchgeführt. Die Begriffe "redundant" und "mehrkanalig" werden im Folgenden synonym verwendet. Dazu kann in einer Recheneinheit beispielsweise eine erste Hardware und eine unterschiedliche, d.h. diversitäre zweite Hardware vorliegen. Eine Berechnung wird dann jeweils auf der ersten Hardware und auf der zweiten Hardware durchgeführt und die jeweiligen Ergebnisse werden verglichen. Lediglich bei Übereinstimmung der Ergebnisse gilt die Berechnung als korrekt und wird weiterverarbeitet. Alternativ können die erste und die zweite Hardware auch identisch ausgebildet sein. Dann wird Diversität auf Ebene der Software eingeführt, beispielsweise dadurch, dass eine Berechnung redundant auf Basis unterschiedlicher Programme, welche beispielsweise in unterschiedlichen Programmiersprachen vorliegen, auf der ersten und der zweiten Hardware durchgeführt wird. Diversität kann auch auf Ebene der Hardware und auf Ebene der Software durchgeführt werden. Redundanz ist dabei nicht auf die Verwendung von nur zwei Kanälen beschränkt.

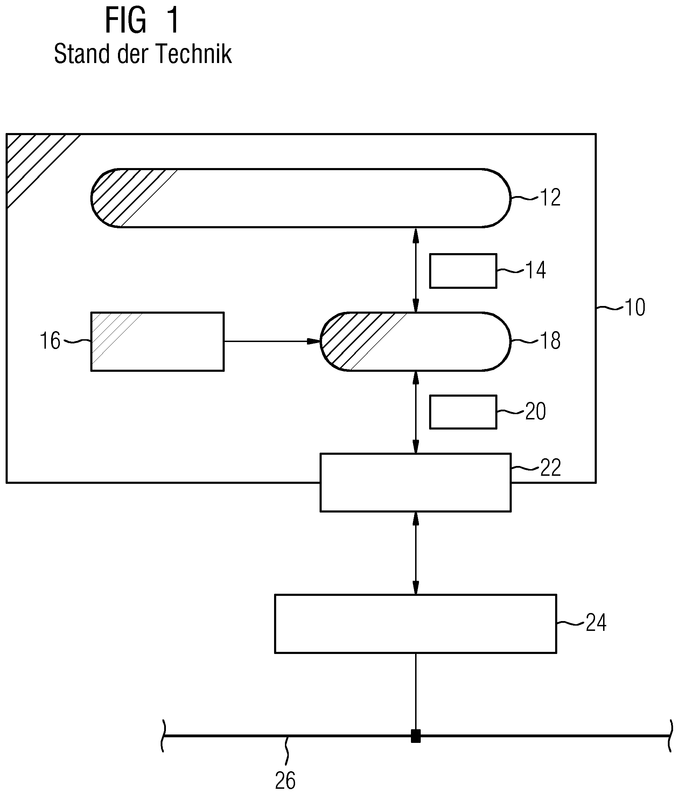

Der Stand der Technik ist in Figur 1 schematisch veranschaulicht.

Aus Dokument US 5 987 554 A1 sind ein Verfahren und eine Vorrichtung zum Verbinden von Bussen bekannt. Diese umfassen einen Systemschnittstellenprozessor, der mit einem ersten Bus verbunden ist und ein Befehlsregister enthält, auf das über einen zweiten Bus zugegriffen werden kann. Es sind ein Anforderungspuffer und ein Antwortpuffer vorgesehen, auf die über den zweiten Bus zugegriffen werden kann und die mit dem Schnittstellenprozessor gekoppelt sind. Der Anforderungspuffer kann zum Speichern von Informationen verwendet werden, die über den Schnittstellenprozessor vom zweiten Bus zum ersten übertragen werden sollen, während der Antwortpuffer zum Speichern von Informationen verwendet werden kann, die über den Schnittstellenprozessor vom ersten Bus zum zweiten Bus übertragen werden sollen. Der Schnittstellenprozessor kann ein Statusregister enthalten, um den Status der Schnittstellensteuerung anzuzeigen. Die Schnittstellensteuerung kann auch ein Befehlsregister enthalten, um über den zweiten Bus übertragene Befehle zu empfangen.

F. POLLACK et al. beschreiben in "A VLSI-intensive faulttolerant computer architecture", COMPCON SPRING 190: THIRTY-FIFTH IEEE COMPUTER SOCIETY INTERNATIONAL CONFERENCE INTELLECTUAL LEVERAGE; 26 FEB.-2 MARCH 1990; SAN FRANCISCO, CA, USA; [COMPUTER SOCIETY INTERNATIONAL CONFERENCE (COMPCON)], IEEE COMPUT. SOC, LOS ALAMITOS, CA, USA, 26. Februar 1990 (1990-02-26), Seiten 134-142, einen Ein- und Ausgabebaustein zum Senden und Empfangen von Daten über eine Datenleitung. Der Ein- und Ausgabebaustein umfasst einen SRAM.

Eine im obigen Sinne signaltechnisch sichere Recheneinheit 10, z.B. ein signaltechnisch sicherer Hauptrechner 10, umfasst dabei eine signaltechnisch sichere Uhr 16 und ist eingerichtet, ein Sicherungsprotokoll 18 zur Datenübertragung signaltechnisch sicher auszuführen, genauso wie eine beliebige Applikation 12. Eine signaltechnisch sichere Uhr ist weiterhin derart ausgebildet, dass diese Uhr streng monoton arbeitet, d.h. nicht stehenbleibt und stets nur in eine Richtung läuft. Von der Applikation 12 erzeugte Daten 14 können dann als mittels des Sicherungsprotokolls 18 gesicherte und mit einem Zeitstempel der sicheren Uhr 16 versehene Daten 20 über einen Ein- und Ausgabespeicher 22, z.B. DP-RAM oder FIFO, an einen signaltechnisch nicht sicheren Ein- und Ausgabebaustein 24 weitergeleitet werden zur Übertragung über eine Datenleitung 26, z.B. einen Bus, ein LAN, etc., an eine analog eingerichtete (in Fig. 1 nicht dargestellte) signaltechnisch sichere Recheneinheit. Eine Synchronisation der Uhren der signaltechnischen Recheneinheiten kann dabei mittels herkömmlicher Synchronisationsverfahren, z.B. nach PTP (Precision Time Protocol) gemäß IEC 1588, erfolgen, welches als Freeware für verschiedene Betriebssysteme vorliegt.

Der Ein- und Ausgabebaustein kann dabei beispielsweise als serieller UART, als Ethernet-Controller oder als Kleinrechner, z.B. auf Linux-Basis, bereitgestellt werden. Als Ein- und Ausgabebaustein werden in der Regel herkömmliche, in Serienfertigung hergestellte Komponenten (so genannte COTS-Komponenten, "commercial off-the-shelf") verwendet, die signaltechnisch nicht sicher sind. Die Signalintegrität wird im signaltechnisch sicheren Hauptrechner bereitgestellt.

Ein Beispiel eines signaltechnisch sicheren Hauptrechners ist ein Rechner der Serie Simis TCC der Firma Siemens. Als Sicherungsprotokoll zur Datenübertragung kann beispielsweise das Protokoll "Safe Link Layer" nach UNISIG Subset 057 verwendet werden. Ein vorstehend beschriebener Ein- und Ausgabebaustein kann entweder als Schaltungsanteil an einen signaltechnisch sicheren Rechner fest auf einem Board angeschlossen werden (wie z.B. einem SIMIS FM Rechner der Fa. Siemens) oder als Kommunikationsbaugruppe in einem Baugruppenrahmen gesteckt werden (wie z.B. als Baugruppe PNET5 im Zusammenhang des vorstehend erwähnten Simis TCC).

Die Aufgabe der vorliegenden Erfindung besteht darin, ein System zur signaltechnisch sicheren Datenübertragung zu vereinfachen.

Erfindungsgemäß wird dazu Ein- und Ausgabebaustein zum Senden und Empfangen von Daten über eine Datenleitung zur Verfügung gestellt. Der Ein- und Ausgabebaustein umfasst einen Protokollautomaten für ein Sicherungsprotokoll zur Datenübertragung sowie eine Uhr. Dadurch ist der Ein- und Ausgabebaustein eingerichtet, zu übertragende Daten mittels des Sicherungsprotokolls zu sichern bzw. mittels des Sicherungsprotokolls gesicherte, empfangene Daten zu verarbeiten. Weiterhin ist der Ein- und Ausgabebaustein eingerichtet, ausgehende, gesicherte Daten mittels eines Zeitstempels, auf Basis der Uhr, zu versehen, und Zeitstempel eingehender Daten mit der aktuellen, durch die Uhr angezeigten Zeit zu vergleichen. Anweisungen zur Uhrenbearbeitung und der Protokollautomat sind dabei als harte Ablaufsteuerung in einem Festwertspeicher des Ein- und Ausgabebausteins hinterlegt. Ein Betriebssystem wird dadurch in dem Ein- und Ausgabebaustein verzichtbar.

Das erfindungsgemäße Verfahren zur Übertragung von Daten zwischen signaltechnisch sicheren Recheneinheiten umfasst die folgenden Schritte: Es wird ein signaltechnisch sicherer Hauptrechner bereitgestellt. Weiterhin wird ein mit dem Hauptrechner koppelbarer, erfindungsgemäßer Ein- und Ausgabebaustein der vorstehend beschriebenen Art bereitgestellt.

Gemäß einer ersten bevorzugten Ausführungsform kann Signalintegrität übermittelter und empfangener Daten dadurch sichergestellt werden, dass der Protokollautomat des Ein- und Ausgabebausteins als signaltechnisch sicherer Protokollautomat redundant ausgebildet ist, und dass die Uhr des Ein- und Ausgabebausteins als signaltechnisch sichere Uhr redundant ausgebildet ist.

Vorzugsweise ist der Ein- und Ausgabebaustein dabei als System-on-Chip-Komponente ausgebildet ist. Ein solcher Ein- und Ausgabebaustein kann dann in Form einer COTS-Komponente bereitgestellt werden.

Gemäß einer zweiten bevorzugten Ausführungsform kann Signalintegrität übermittelter Daten dadurch sichergestellt werden, dass anstelle eines mehrkanaligen signaltechnisch sicheren Ein- und Ausgabebausteins eine Ein- und Ausgabebaugruppe bereitgestellt wird. Diese Ein- und Ausgabebaugruppe umfasst einen ersten erfindungsgemäßen, nicht notwendigerweise signaltechnisch sicheren Ein- und Ausgabebaustein und einen zweiten erfindungsgemäßen, nicht notwendigerweise signaltechnisch sicheren Ein- und Ausgabebaustein. Der erste Ein- und Ausgabebaustein ist dabei im Vergleich zum zweiten Ein- und Ausgabebaustein diversitär ausgebildet. Auf diese Weise, d.h. Herstellung von diversitärer Redundanz durch Kombination des ersten und zweiten Ein- und Ausgabebausteins, kann signaltechnische Sicherheit hergestellt werden.

Ein signaltechnisch sicherer Hauptrechner, mit dem die Ein- und Ausgabebaugruppe gekoppelt wird, kann dann zusätzlich einen Vergleichsbaustein umfassen, der eingerichtet ist, von dem ersten Ein- und Ausgabebaustein empfangene Daten mit von dem zweiten Ein- und Ausgabebaustein empfangenen Daten zu vergleichen.

Auch der erste und der zweite Ein- und Ausgabebaustein der Ein- und Ausgabebaugruppe können als System-on-Chip-Komponente ausgebildet sein in Form einer COTS-Komponente bereitgestellt werden.

Die Erfindung wird in den unabhängigen Patentansprüche 1,6 bis 9 definiert.

Die abhängigen Ansprüche 2 bis 5 und 10 spezifizieren zweckmäßige Ausgestaltungen des Gegenstandes ihres Hauptanspruchs.

Die Erfindung bietet eine Reihe von Vorteilen:
Ein signaltechnisch sicherer Hauptrechner wird dadurch entlastet, dass die Aufgaben der Zeitstempelung mittels der signaltechnisch sicheren Uhr und die Protokollsicherung ausgehender Daten und die Protokollbearbeitung eingehender Daten in den erfindungsgemäßen separaten Ein- und Ausgabebaustein ausgelagert werden. Dadurch verringern sich mit Bezug auf den signaltechnisch sicheren Hauptrechner projektspezifische Integrationskosten, da das Sicherungsprotokoll und die sichere Uhr im Hauptrechner nicht mehr bereitstellt werden müssen. Die Integrationskosten ergeben sich nur noch einmalig, bei der Entwicklung des erfindungsgemäßen Ein- und Ausgabebausteins. Erstmals steht nun ein signaltechnisch sicherer Ein- und Ausgabebaustein zur Verfügung, welcher als System-on-Chip-Komponente verfügbar ist und einen Protokollautomaten für ein Sicherungsprotokoll sowie eine Uhr in signaltechnisch sicherer Weise hart codiert umfasst.

Ein weiterer wesentlicher Vorteil der Erfindung besteht darin, dass ein Zeitstempeln ausgehender Daten und eine Überprüfung eines Zeitstempels eingehender Daten nun direkt hardwarenah im Ein- und Ausgabebaustein, und nicht wie bisher, auf Applikationsebene des Hauptrechners, durchgeführt werden. Auf dieser Weise erzeugte Zeitstempel und gemessene Laufzeiten übermittelter Daten sind erheblich präziser als bisher, da Verzögerungen, welche bisher durch Laufzeiten von der Applikationsebene durch einen Protokollstapel zum Ein- und Ausgabebaustein (oder umgekehrt) entstanden sind, nun nicht mehr anfallen. Werte unterhalbe einer Millisekunde sind nun erreichbar. Dies ist insbesondere im Zusammenhang mit Echtzeitanwendungen von Vorteil.

Durch das Auslagern der Uhr in den Ein- und Ausgabebaustein wird auch eine Synchronisation der Uhren der an einer Datenübertragung beteiligten Recheneinheiten deutlich vereinfacht. Insbesondere werden Zeitstempel, die zur Synchronisation der Uhren herangezogen werden, nun durch signaltechnisch sichere Uhren bestimmt.

Die Ausführungsform, in der anstelle eines signaltechnisch sicheren mehrkanaligen Ein- und Ausgabebausteins eine Ein- und Ausgabebaugruppe mit zwei nicht notwendigerweise signaltechnisch sicheren, aber diversitären Ein- und Ausgabebausteinen verwendet wird, bieten des Vorteil, dass so genannte "common mode"-Fehler, z.B. bei Stromausfall, verhindert werden können. Auch kann bei Ausfall eines Ein- und Ausgabebausteins der Baugruppe eine Datenübertragung zumindest noch auf signaltechnisch nicht sichere Weise durchgeführt werden. Zusammenfassend kann durch die Erfindung die Übertragungstechnik von Daten zwischen signaltechnisch sicheren Recheneinheiten mit Bezug auf einen Uhrenabgleich und eine verlustfreie Datenkommunikation in Echtzeit verbessert werden.

Gemäß der Ausführungsform des Ein- und Ausgabenbausteins in der der Protokollautomat als signaltechnisch sicherer Protokollautomat redundant ausgebildet ist und die Uhr als signaltechnisch sichere Uhr redundant ausgebildet ist, kann nach einer bevorzugten Variante der Protokollautomat diversitär redundant ausgebildet sein. Alternativ oder zusätzlich kann die Uhr diversitär redundant ausgebildet sein. Diese beiden Maßnahmen erhöhen jeweils die signaltechnische Sicherheit des Ein- und Ausgabebausteins.
In einer ersten Ausführungsform eines Systems zur Übertragung von Daten zwischen signaltechnisch sicheren Recheneinheiten umfasst zumindest eine signaltechnisch sichere Recheneinheit einen signaltechnisch sicheren, d.h. mehrkanaligen oder redundanten, vorzugsweise diversitär redundanten Hauptrechner sowie einen mit dem Hauptrechner gekoppelten erfindungsgemäßen und signaltechnisch sicheren mehrkanaligen Ein- und Ausgabebaustein.
In einer zweiten Ausführungsform eines Systems zur Übertragung von Daten zwischen signaltechnisch sicheren Recheneinheiten umfasst eine signaltechnisch sichere Recheneinheit einen signaltechnisch sicheren Hauptrechner, eine mit dem Hauptrechner gekoppelte Ein- und Ausgabebaugruppe der vorstehend beschriebenen Art sowie einen Vergleichsbaustein, welcher eingerichtet ist, von dem ersten Ein- und Ausgabebaustein empfangene Daten mit von dem zweiten Ein- und Ausgabebaustein empfangenen Daten zu vergleichen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine signaltechnisch sichere Recheneinheit nach dem Stand der Technik, welche zum Übermitteln/Empfangen von Daten an/von einer weiteren signaltechnisch sicheren Recheneinheit ausgebildet ist;
- Figur 2: eine entsprechende signaltechnisch sichere Recheneinheit gemäß einer ersten bevorzugten Ausführungsform der Erfindung;
- Figur 3: eine entsprechende signaltechnisch sichere Recheneinheit gemäß einer zweiten bevorzugten Ausführungsform der Erfindung; und
- Figur 4: schematisch Schritte einer bevorzugten Ausführungsform eines erfindungsgemäßen Verfahrens zur Übertragung von Daten zwischen signaltechnisch sicheren Recheneinheiten.

In der Figur 1 ist eine vorstehend bereits knapp beschriebene signaltechnisch gesicherte Recheneinheit 10 gemäß dem Stand der Technik gezeigt, welche zum Übermitteln/Empfangen von Daten an/von einer weiteren signaltechnisch sicheren (in Fig. 1 nicht gezeigten) Recheneinheit ausgebildet ist. Die Recheneinheit 10 ist mehrkanalig ausgebildet und umfasst eine mehrkanalig gesicherte Uhr 16. Die Recheneinheit 10 ist eingerichtet, das Sicherungsprotokoll 18 zur Datenübertragung sowie eine Applikation 12 redundant auszuführen. Von der Applikation 12 erzeugte Daten 14 werden als mittels des Sicherungsprotokolls 18 gesicherte und mit einem von der sicheren Uhr erzeugten Zeitstempel versehene Daten 20 an einen Ein- und Ausgabespeicher 22 weitergeleitet und von dort mittels eines herkömmlichen Ein- und Ausgabebausteins, beispielsweise eines seriellen UART oder eines Ethernet-Controllers, über eine Datenleitung 26, wie z.B. einen Bus, ein LAN oder dergleichen, an eine weitere, in Fig. 1 nicht gezeigte, analog aufgebaute signaltechnisch sichere Recheneinheit übertragen.

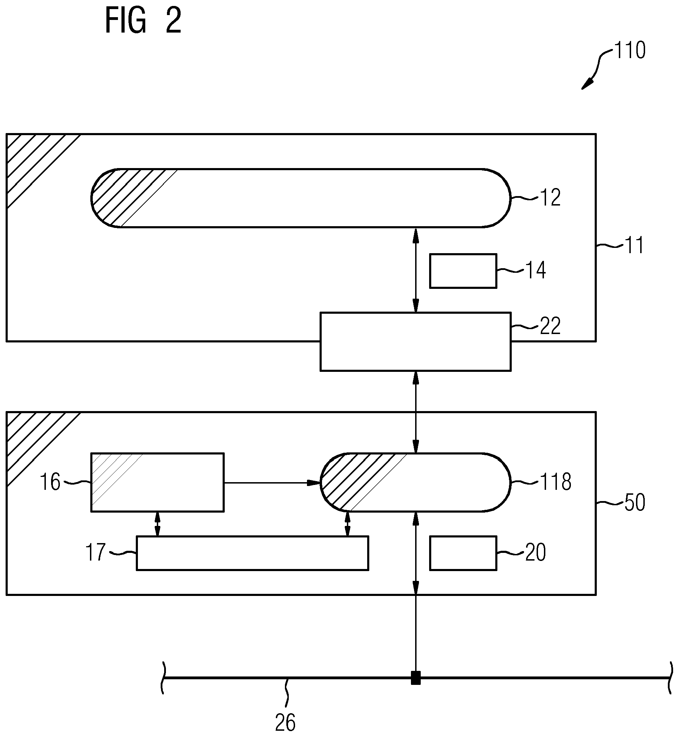

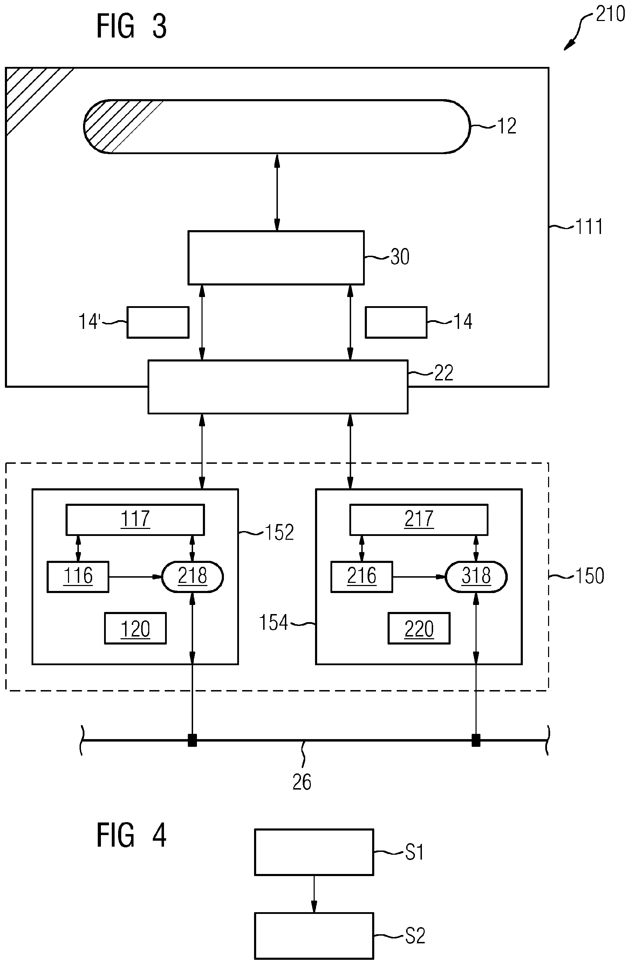

In Fig. 1, wie auch den nachfolgenden Figuren 2 und 3, wird mehrkanalig ausgebildete signaltechnisch sichere Hardware mittels eines in der linken oberen Ecken teilweise schraffierten Rechtecks dargestellt, wie z.B. die Recheneinheit 10 oder die sichere Uhr 16 in Fig. 1. Signaltechnisch sicher ausgeführte Software wird entsprechend mit einem links teilweise schraffierten Oval dargestellt, wie die Applikation 12 oder das Sicherungsprotokoll 18 in Fig. 1. Entsprechende signaltechnisch nicht sichere Pendants (vgl. Fig. 3) zeigen jeweils keine Schraffur.

In Fig. 2 ist eine ebenfalls zum Übermitteln/Empfangen von Daten an/von einer weiteren signaltechnisch sicheren (in Fig. 2 nicht gezeigten) Recheneinheit ausgebildete signaltechnisch sichere Recheneinheit 110 gemäß einer ersten Ausführungsform der Erfindung schematisch dargestellt.

Diese umfasst einen signaltechnisch sicheren Hauptrechner 11. Dieser ist eingerichtet, die Applikation 12 signaltechnisch sicher auszuführen und seitens der Applikation 12 erzeugte Daten 14 an einen Ein- und Ausgabespeicher 22 weiterzuleiten.

Im Gegensatz zu Fig. 1 sind die Funktionalitäten der Protokollsicherung und des Zeitstempelns nicht mehr im Hauptrechner 11 angesiedelt, sondern in einen separaten Ein- und Ausgabebaustein 50 ausgelagert, der mit dem Hauptrechner 11 gekoppelt ist. Der Ein- und Ausgabebaustein 50 ist als System-on-Chip-Komponente ausgebildet und umfasst eine mehrkanalig gesicherte signaltechnisch sichere Uhr 16 sowie einen signaltechnisch sicheren Protokollautomaten 118 zum Ausführen eines Sicherungsprotokolls 18 zur Datenübertragung. Von dem Ein- und Ausgabespeicher 22 entnommene Daten 14 können mittels des Sicherungsprotokolls 18 gesichert und auf Basis der Uhr 16 mit einem Zeitstempel versehen werden. Die resultierenden gesicherten und zeitgestempelten Daten 20 können dann über die Datenleitung 26 an die weitere Recheneinheit übertragen werden.

Da der Ein- und Ausgabebaustein 50 nur einen bekannten und dezidierten Funktionsumfang besitzt, können die Anweisungen zur Uhrenbearbeitung sowie der Protokollautomat 118 in einem Festwertspeicher 17 des Ein- und Ausgabebausteins 50 hart codiert vorliegen. Zur Programmierung können verschiedene Programmiersprachen verwendet werden, wie z.B. C, Assembler, oder - bei FPGAs ohne CPU-Kern - z.B. VHDL.

Der signaltechnisch sichere Ein- und Ausgabebaustein 50 kann beispielsweise zwei physikalisch getrennte FPGA-Bausteine oder Mikrocontroller-Bausteine umfassen, die parallel redundant vorliegen und lose (zyklisch) oder fest (lockstep) miteinander gekoppelt sind. Auf diese Weise kann in einem Ein- und Ausgabebaustein 50 die signaltechnisch sichere Uhr 16 und der signaltechnisch sichere Protokollautomat 18 bereitgestellt werden. Jeder der beiden physikalisch getrennten Bausteine kann dabei einen Kanal einer mehrkanaligen Architektur bereitstellen.

Die Integration kann dabei nach EN 50129 SIL4 vorgenommen werden und liefert einen Validationsbericht samt Sicherheitsnachweis. Das Ergebnis der Integration auf der untersten Ebene ist dann eine signaltechnisch sichere COTS-Komponente. Aus einer frei programmierbaren Einheit gemäß dem Stand der Technik ist gemäß der Ausführungsform nach Fig. 2 ein dezidierter Ein- und Ausgabebaustein 50 mit festem, unveränderlichem Funktionsumfang geworden, der funktionsfähig inklusive sicherer Uhr, Synchronisations- und Sicherungsprotokollen und einem Sicherheitsnachweis vorliegt.

In Fig. 3 ist eine signaltechnisch sichere Recheneinheit 210 gemäß einer zweiten Ausführungsform der Erfindung schematisch dargestellt.

Der Hauptunterschied zu der Ausführungsform nach Fig. 2 liegt darin, dass anstelle des signaltechnisch sicheren mehrkanaligen Ein- und Ausgabebausteins 50 nun zwei diversitäre, signaltechnisch jeweils nicht notwendigerweise sichere Ein- und Ausgabebausteine 152, 154 bereitgestellt werden, die in der angedeuteten Ein- und Ausgabebaugruppe 150 zusammengefasst werden.

Jeder der Ein- und Ausgabebausteine 152, 154 umfasst eine Uhr 116, 216 und einen Protokollautomaten 218, 318 zum Ausführen eines Sicherungsprotokolls 18. Die Anweisungen zur Uhrenbearbeitung sowie der Protokollautomat 218, 318 sind, wie im Zusammenhang mit Fig. 2 beschrieben, in einem Festwertspeicher 117, 217 des jeweiligen Ein- und Ausgabebausteins 152, 154 hart codiert. Der erste Ein- und Ausgabebaustein 152 ist im Vergleich zum zweiten Ein- und Ausgabebaustein 154 diversitär ausgebildet. Diversität kann auf Ebene der verwendeten Hardware vorliegen. Alternativ oder zusätzlich kann auch die implementierte Software (Uhr, Protokollautomat) diversitär ausgebildet sein.

In gewisser Hinsicht kann die Ein- und Ausgabebaugruppe 150 gemäß Fig. 3 als eine Baugruppe angesehen werden, die entsteht, wenn die beiden Kanäle des signaltechnisch sicheren Ein- und Ausgabebausteins 50 aus Fig. 2 getrennt werden, wodurch die Ein- und Ausgabebausteine 152, 154 entstehen.

In Kombination können der erste 152 und der zweite Ein- und Ausgabebaustein 154 als eine signaltechnisch sichere Ein- und Ausgabebaugruppe angesehen werden. Dies gilt zumindest dann, wenn der Hauptrechner 111 einen Vergleichsbaustein 30 umfasst, der eingerichtet ist, von den beiden Ein- und Ausgabebausteinen 152, 154 empfangene Eingangsdaten zu vergleichen.

Von der Recheneinheit 210 redundant ausgehende gesicherte und zeitgestempelte Daten 120, 220 werden seitens eines Vergleichsbausteins einer (nicht gezeigten) empfangenden signaltechnisch Recheneinheit, die die durch die Protokollautomaten 218, 318 implementierten Sicherungsprotokolle ebenfalls unterstützen muss, auf Ebene der Applikationsdaten 14, 14' verglichen. In der empfangenden Recheneinheit werden zudem die jeweiligen Zeitstempel dahingehend geprüft, ob die Uhren 116, 216 innerhalb vorgeschriebener Grenzen synchron sind, nur vorwärts laufen und nicht stehen geblieben sind.

Auch die Ein- und Ausgabebausteine 152, 154 können in Form von System-on-Chip-Komponenten herstellt und als COTS-Komponenten bereitgestellt werden.

Fig. 4 zeigt schematisch Schritte einer bevorzugten Ausführungsform eines erfindungsgemäßen Verfahrens zur Übertragung von Daten zwischen signaltechnisch sicheren Recheneinheiten.

Das Verfahren umfasst die folgenden Schritte:
Es wird in Schritt S1 ein signaltechnisch sicherer Hauptrechner bereitgestellt.

Weiterhin wird in Schritt S2 ein mit dem Hauptrechner koppelbarer, Ein- und Ausgabebaustein der vorstehend beschriebenen Art bereitgestellt, welcher einen Protokollautomaten für ein Sicherungsprotokoll zur Datenübertragung und eine Uhr umfasst, wobei Anweisungen zur Uhrenbearbeitung und der Protokollautomat als harte Ablaufsteuerung in einem Festwertspeicher des Ein- und Ausgabebausteins hinterlegt sind.

Gemäß einer ersten Ausführungsform kann ein Hauptrechner 11 und ein signaltechnisch sicherer Ein- und Ausgabebaustein 50 gemäß Fig. 2 bereitgestellt werden.

Gemäß einer zweiten Ausführungsform kann ein Hauptrechner 111 und eine Ein- und Ausgabebaugruppe 150 gemäß Fig. 3 bereitgestellt werden, welche einen ersten und zweiten Ein- und Ausgabebaustein 152, 154 der vorstehend mit Bezug auf Schritt S2 beschriebenen Art umfasst.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Ein- und Ausgabebaustein (50; 152; 154) zum Senden und Empfangen von Daten über eine Datenleitung (26), durch folgende Merkmale gekennzeichnet:
- einen Protokollautomaten (118; 218; 318) für ein Sicherungsprotokoll zur Datenübertragung, und
- eine Uhr (16; 116; 216), wobei
- Anweisungen zur Uhrenbearbeitung und der Protokollautomat als Ablaufsteuerung in einem Festwertspeicher (17; 117; 217) des Ein- und Ausgabebausteins hinterlegt sind.

2. Ein- und Ausgabenausstein (50) nach Anspruch 1,
**dadurch gekennzeichnet, dass**
- der Protokollautomat (118) als signaltechnisch sicherer Protokollautomat redundant ausgebildet ist und dass
- die Uhr (16) als signaltechnisch sichere Uhr redundant ausgebildet ist.

3. Ein- und Ausgabebaustein (50) nach Anspruch 2,
**dadurch gekennzeichnet, dass**
der Protokollautomat (118) diversitär redundant ausgebildet ist.

4. Ein- und Ausgabebaustein (50) nach Anspruch 2 oder 3,
**dadurch gekennzeichnet, dass**
die Uhr (16) diversitär redundant ausgebildet ist.

5. Ein- und Ausgabebaustein (50; 152; 154) nach einem der Ansprüche 1 bis 4,
**dadurch gekennzeichnet, dass**
der Ein- und Ausgabebaustein als System-on-Chip-Komponente ausgebildet ist.

6. Ein- und Ausgabebaugruppe (150), umfassend
- einen ersten Ein- und Ausgabebaustein (152) nach Anspruch 1 oder 5 und
- einen zweiten Ein- und Ausgabebaustein (154) nach Anspruch 1 oder 5, **dadurch gekennzeichnet, dass** der erste Ein- und Ausgabebaustein (152) im Vergleich zum zweiten Ein- und Ausgabebaustein (154) diversitär ausgebildet ist.

7. System zur Übertragung von Daten zwischen signaltechnisch sicheren Recheneinheiten, wobei zumindest eine signaltechnisch sichere Recheneinheit (110)
- einen signaltechnisch sicheren Hauptrechner (11) sowie
- einen mit dem Hauptrechner gekoppelten Ein- und Ausgabebaustein (50) nach einem der Ansprüche 2 bis 5 umfasst.

8. System zur Übertragung von Daten zwischen signaltechnisch sicheren Recheneinheiten, wobei eine signaltechnisch sichere Recheneinheit (210)
- einen signaltechnisch sicheren Hauptrechner (111),
- eine mit dem Hauptrechner gekoppelte Ein- und Ausgabebaugruppe (150) nach Anspruch 6, sowie
- einen Vergleichsbaustein (30) umfasst,
wobei der Vergleichsbaustein eingerichtet ist, von dem ersten Ein- und Ausgabebaustein (152) empfangene Daten mit von dem zweiten Ein- und Ausgabebaustein (152) empfangenen Daten zu vergleichen.

9. Verfahren zur Übertragung von Daten zwischen signaltechnisch sicheren Recheneinheiten, umfassend die Schritte:
- Bereitstellen (S1) eines signaltechnisch sicheren Hauptrechners (11; 111),
- Bereitstellen (S2) eines mit dem Hauptrechner koppelbaren Ein- und Ausgabebausteins (50; 152) nach einem der Ansprüche 1 bis 5.

10. Verfahren nach Anspruch 9, **dadurch gekennzeichnet, dass** der Ein- und Ausgabebaustein (152) als erster Ein- und Ausgabebaustein einer mit dem Hauptrechner (111) koppelbaren Ein- und Ausgabebaugruppe (150) nach Anspruch 6 ausgebildet ist, weiter umfassend einen Schritt des
- Bereitstellens eines Vergleichsbausteins (30), welcher eingerichtet ist, von dem ersten Ein- und Ausgabebaustein (152) empfangene Daten mit von dem zweiten Ein- und Ausgabebaustein (154) empfangenen Daten zu vergleichen.

## Claims

1. Input and output chip (50; 152; 154) for sending and receiving data via a data line (26), **characterized by** the following features:
- a protocol state machine (118; 218; 318) for a data link protocol for data transmission, and
- a clock (16; 116; 216), wherein
- instructions for clock processing and the protocol state machine are stored as sequence control in a read only memory (17; 117; 217) of the input and output chip.

2. The input and output chip (50) according to Claim 1, **characterized in that**
- the protocol state machine (118) is in redundant form as a protocol state machine having safe signaling technology and **in that**
- the clock (16) is in redundant form as a clock having safe signaling technology.

3. Input and output chip (50) according to Claim 2,
**characterized in that**
the protocol state machine (118) is in diversely redundant form.

4. Input and output chip (50) according to Claim 2 or 3,
**characterized in that**
the clock (16) is in diversely redundant form.

5. Input and output chip (50; 152; 154) according to one of Claims 1 to 4,
**characterized in that**
the input and output chip is in the form of a system on chip component.

6. Input and output assembly (150), comprising
- a first input and output chip (152) according to Claim 1 or 5 and
- a second input and output chip (154) according to Claim 1 or 5, **characterized in that** the first input and output chip (152) is in diverse form in comparison with the second input and output chip (154).

7. System for transmitting data between computation units having safe signaling technology, wherein at least one computation unit (110) having safe signaling techology comprises
- a main computer (11) having safe signaling technology and
- an input and output chip (50) according to one of Claims 2 to 5 that is coupled to the main computer.

8. System for transmitting data between computation units having safe signaling technology, wherein one computation unit (210) having safe signaling technology comprises
- a main computer (111) having safe signaling technology,
- an input and output assembly (150) according to Claim 6 that is coupled to the main computer, and also
- a comparison chip (30),
wherein the comparison chip is configured to compare data received from the first input and output chip (152) with data received from the second input and output chip (152).

9. Method for transmitting data between computation units having safe signaling technology, comprising the steps of:
- providing (S1) a main computer (11; 111) having safe signaling technology,
- providing (S2) an input and output chip (50; 152) according to one of Claims 1 to 5 that is couplable to the main computer.

10. Method according to Claim 9, **characterized in that** the input and output chip (152) is in the form of a first input and output chip of an input and output assembly (150) according to Claim 6 that is couplable to the main computer (111),
further comprising a step of
- providing a comparison chip (30) configured to compare data received from the first input and output chip (152) with data received from the second input and output chip (154) .

## Revendications

1. Module (50 ; 152 ; 154) d'entrée et sortie pour envoyer et recevoir des données par une ligne (26) de données, **caractérisé par** les caractéristiques suivantes :
- un automate (118 ; 218 ; 318) de sécurisation pour la transmission de données, et
- une horloge (16 ; 116 ; 216), dans lequel
- des instructions de traitement d'horloge et de l'automate de protocole sont mémorisées, comme commande de déroulement,
dans une mémoire (17 ; 117 ; 217) morte du module d'entrée et sortie.

2. Module (50) d'entrée et sortie suivant la revendication 1,
**caractérisé en ce que**
- l'automate (118) de protocole est constitué de manière redondante en automate de protocole sécurisé en technique du signal et **en ce que**
- l'horloge (16) est constituée de manière redondante en horloge sécurisée en technique du signal.

3. Module (50) d'entrée et sortie suivant la revendication 2,
**caractérisé en ce que**
l'automate (118) de protocole est constitué de manière redondante en diversité.

4. Module (50) d'entrée et sortie suivant la revendication 2 ou 3,
**caractérisé en ce que** l'horloge (16) est constituée de manière redondante en diversité.

5. Module (50) d'entrée et sortie suivant l'une des revendications 1 à 4,
**caractérisé en ce qu'**
un module d'entrée et sortie est constitué sous la forme d'un composant system-on-chip.

6. Ensemble (150) d'entrée et sortie, comprenant
- un premier module (152) d'entrée et sortie suivant la revendication 1 ou 5 et
- un deuxième module (154) d'entrée et sortie suivant la revendication 1 ou 5,
**caractérisé en ce que**
le premier module (152) d'entrée et sortie est constitué en diversité par rapport au deuxième module (154) d'entrée et sortie.

7. Système de transmission de données entre des unités informatiques sécurisées en technique du signal, au moins une unité (110) informatique sécurisée en technique du signal comprenant
- un ordinateur (11) principal sécurisé en technique du signal, ainsi qu'
- un module (50) d'entrée et sortie suivant l'une des revendications 2 à 5, connecté à l'ordinateur principal.

8. Système de transmission de données entre des unités informatiques sécurisées en technique du signal, une unité (210) informatique sécurisée en technique du signal comprenant
- un ordinateur (111) principal sécurisé en technique du signal,
- un module (150) d'entrée et sortie suivant la revendication 6, connecté à l'ordinateur principal, ainsi qu'
- un module (30) de comparaison,
le module de comparaison étant conçu pour comparer des données reçues du premier module (152) d'entrée et sortie à des données reçues du deuxième module (152) d'entrée et sortie.

9. Procédé de transmission de données entre des unités informatiques sécurisées en technique du signal, comprenant les stades :
- on se procure (S1) un ordinateur (11 ; 111) principal sécurisé en technique du signal,
- on se procure (S2) un module (50 ; 152) d'entrée et sortie suivant l'une des revendications 1 à 5, pouvant être connecté à l'ordinateur principal.

10. Procédé suivant la revendication 9, **caractérisé en ce que** le module (152) d'entrée et sortie est constitué en premier module d'entrée et sortie d'un ensemble (150) d'entrée et sortie suivant la revendication 6, pouvant être connecté à l'ordinateur (111) principal,
comprenant, en outre, un stade dans lequel
- on se procure un module (30) de comparaison conçu pour comparer des données reçues du premier module (152) d'entrée et sortie et des données reçues du deuxième module (154) d'entrée et sortie.
